# EUROPEAN PATENT SPECIFICATION

(11) **EP 1 983 690 B1**
(45) Date of publication and mention of the grant of the patent: **26.11.2014**
(21) Application number: 08014015.5
(22) Date of filing: 26.04.2007
(51) Int. Cl.: H04L 12/28, H04W 8/00, H04W 52/50, H04W 56/00, H04W 76/04, H04W 84/18

(54) **Methods and apparatuses of initiating communication in wireless networks**
Verfahren und Vorrichtungen zur Initiierung von Kommunikationen in drahtlosen Netzwerken
Procédés et appareils pour initier la communication dans des réseaux sans fil

(30) Priority: 26.04.2006 US 795512 P
(43) Date of publication of application: 22.10.2008
(62) Divisional of application: 07761403.0
(73) Proprietor: Qualcomm Incorporated, San Diego, CA 92121-1714 (US)
(72) Inventor: Lee, Chong, V., San Diego California 92131 (US); Ekbal, Amal, San Diego California 92122 (US); Julian, David, Jonathan, San Diego California 92128 (US); Moallemi, Kamran, Del Mar California 92014 (US)
(74) Representative: Carstens, Dirk Wilhelm

(56) References cited:
- US-A1- 2004 208 152
- VASUDEVAN S ET AL: "Design and analysis of a leader election algorithm for mobile ad hoc networks" NETWORK PROTOCOLS, 2004. ICNP 2004. PROCEEDINGS OF THE 12TH IEEE INTERNATIONAL CONFERENCE ON BERLIN, GERMANY 5-8 OCT. 2004, PISCATAWAY, NJ, USA,IEEE, 5 October 2004 (2004-10-05), pages 350-360, XP010734836 ISBN: 0-7695-2161-4
- SUNDARARAMAN B ET AL: "Clock synchronization for wireless sensor networks: a survey" AD HOC NETWORKS, ELSEVIER, vol. 3, no. 3, May 2005 (2005-05), pages 281-323, XP004768539 ISSN: 1570-8705
- MASATOSHI SEKINE ET AL: "An Energy-Efficient Protocol for Active/Sleep Schedule Synchronization in Wireless Sensor Networks" COMMUNICATIONS, 2006 ASIA-PACIFIC CONFERENCE ON, IEEE, PI, August 2006 (2006-08), pages 1-5, XP031024251 ISBN: 1-4244-0573-4
- KREDO ET AL: "Medium access control in wireless sensor networks" COMPUTER NETWORKS, ELSEVIER SCIENCE PUBLISHERS B.V., AMSTERDAM, NL, vol. 51, no. 4, 28 December 2006 (2006-12-28), pages 961-994, XP005817607 ISSN: 1389-1286

## Description

The present application for patent claims priority to U.S. Provisional Patent Application No. US 2007/0281721, entitled "LOW DUTY CYCLE DEVICE INITIATED TIMING SYNCHRONIZATION," filed April 26, 2006, Attorney Docket No. 061004P1, assigned to the assignee hereof.

### BACKGROUND

### Field

This application relates generally to communications, and more specifically, to ultra-wide band communication.

### Background

Wireless technologies enable communications between devices and may be employed for a variety of applications associated with various wireless communication networks such as personal area network ("PAN") and body area network ("BAN"). Synchronization of communications in such a network can consume substantial resources of a device. Thus, a need exists for alternative methods and apparatuses for communication synchronization.

Attention is drawn to the document VASUDEVAN S ET AL: "Design and analysis of a leader election algorithm for mobile ad hoc networks" NETWORK PROTOCOLS, 2004. ICNP 2004. PROCEEDINGS OF THE 12TH IEEE INTERNATIONAL CONFERENCE ON BERLIN, GERMANY 5-8 OCT. 2004, PISCATAWAY, NJ, USA, IEEE, 5 October 2004, pages 350-360, XP010734836 ISBN: 0-7695-2161-4, which relates to Leader election for mobile ad hoc networks. Existing solutions to leader election do not handle frequent topology changes and dynamic nature of mobile networks. In this document a leader election algorithm that is highly adaptive to arbitrary (possibly concurrent) topological changes is presented. The algorithm is based on finding an extrema and uses diffusing computations for this purpose. For the leader election, in its acknowledgement message, a node announces to its parent the identifier and a value for the most-valued-node to a source node which compares the values and selects the leader which is broadcast to all nodes. The leader sends a beacon signal to the other nodes.

Further attention is drawn to the document SUNDARARAMAN B ET AL: "Clock synchronization for wireless sensor networsk: a survey" AD HOC NETWORKS, ELSEVIER, vol. 3, no. 3, May 2005, pages 281-323, XP004768539 ISSN: 1570-8705, This document relates to small, low-cost, and low-power sensors. Wireless sensor networks (WSNs) are large-scale networks of such sensors, dedicated to, observing and monitoring various aspects of the physical world. In such networks, data from each sensor is agglomerated using *data fusion* to form a single meaningful result, which makes time synchronization between sensors highly desirable. This document surveys and evaluates existing clock synchronization protocols based on a palette of factors like precision, accuracy, cost, and complexity. The design considerations presented here can help developers either in choosing an existing synchronization protocol or in defining a new protocol that is best suited to the specific needs of a sensor-network application.

Attention is also drawn to the document US 2004/208152 A1, which relates to a communications network which has coordinator devices each transmitting a beacon message in a cluster area. Neighboring coordinator devices define overlap areas in which each beacon message of the neighboring coordinator devices is present. Neighboring coordinator devices may also define non-overlap areas in which each beacon message is present. A method for distributing communication signals includes providing nodes within a transmission region of the coordinator devices. The node or nodes detect at least one beacon message of the neighboring coordinator devices, determine the existence of a condition, and warn neighboring coordinator devices of the condition. The condition is corrected by making an adjustment to the communication signal (such as beacon timing) by a correction amount.

### SUMMARY

In accordance with the present invention, a method of wireless communications, as set forth in claim 1, an electronic device for wireless communications, as set forth in claim 11, and a computer-program product for wireless communications, as set forth in claim 22, is provided. Further embodiments are claimed in the dependent claims.

A summary of sample aspects of the disclosure follows. For convenience, one or more aspects of the disclosure may be referred to herein simply as "some aspects."

Method and apparatuses or devices of the invention each have several aspects, no single one of which is solely responsible for its desirable attributes. Without limiting the scope of this invention, for example, as expressed by the claims which follow, its more prominent features will now be discussed briefly. After considering this discussion, and particularly after reading the section entitled "Detailed Description" one will understand how the features of this invention provide advantages that include reduced consumption of power and/or other resources, for communication synchronization in, for example, an Ultra- wideband (UWB) network.

Some aspects include a method of communicating data. The method includes receiving information identifying at least one resource of a second electronic device, comparing the resource information of the electronic device and the received resource information of the second electronic device. The method may also include transmitting a synchronization signal to the second device based on the resource comparison. The method may also include receiving a synchronization signal from the second device subsequent to the resources comparison. Other aspects include systems, apparatuses, and devices for communicating data. For example, some aspects include devices such as headsets, watches, and medical devices configured to use such methods for communicating data.

### BRIEF DESCRIPTION OF THE DRAWINGS

Figure 1 is a block diagram illustrating an example system of wirelessly connected devices.

Figure 2 is a block diagram illustrating an example of a wireless device such as illustrated in Figure 1.

Figure 3 is a block diagram illustrating a transmitter of a device such as illustrated in Figure 2.

Figure 4 is a block diagram illustrating a receiver of a device such as illustrated in Figure 2.

Figure 5 is a block diagram illustrating another example system of wirelessly connected devices.

Figure 6 is a flowchart illustrating an example of a method of communicating data such as in the example system such as illustrated Figure 1.

Figure 7 is a block diagram illustrating an example of a device that transmits data using a method such as illustrated in Figure 6.

Figure 8 is a flowchart illustrating another example of a method of communicating data such as in the example system such as illustrated Figure 1.

Figure 9 is a block diagram illustrating an example of a device that transmits data using a method such as illustrated in Figure 8.

Figure 10 is a flowchart illustrating another example of a method of communicating data such as in the example system such as illustrated Figure 1.

Figure 11 is a block diagram illustrating an example of a device that transmits data using a method such as illustrated in Figure 10.

Figure 12 is a flowchart illustrating another example of a method of communicating data such as in the example system such as illustrated Figure 1.

Figure 13 is a block diagram illustrating an example of a device that transmits data using a method such as illustrated in Figure 12.

### DETAILED DESCRIPTION

The following detailed description is directed to certain specific aspects of the invention. However, the invention can be embodied in a multitude of different ways, as defined and covered by the claims. It should be apparent that the aspects herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects communication channels between devices may be based on pulse position modulation. In some aspects, communication channels between devices may be based on a convolutional coding. In some aspects, communication channels may be based on pulse position modulation and convolutional coding.

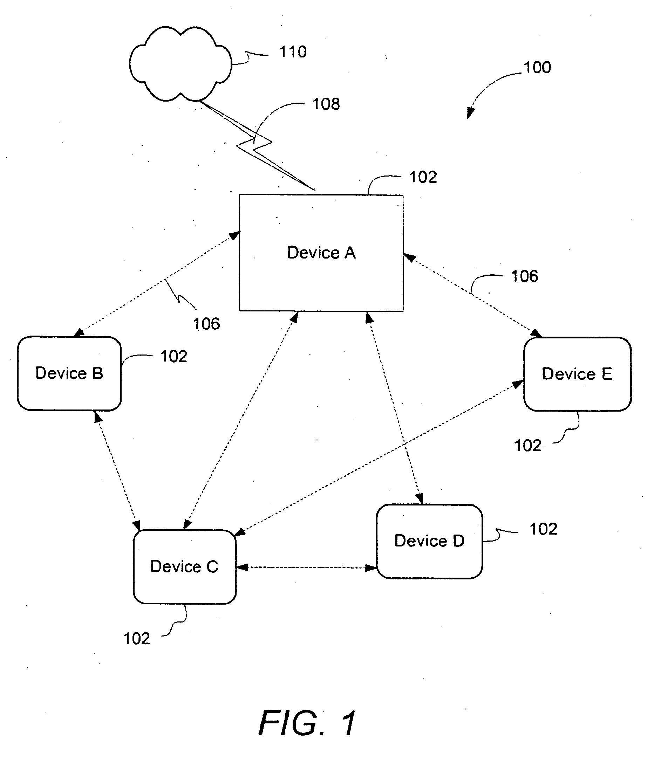

Figure 1 is a block diagram illustrating an example system 100 of wirelessly connected devices 102 (e.g., labeled Device A, ..., Device E). While five devices are shown in Figure 1, examples of the system 100 may be configured to use any number of devices 102. The system 100 may comprise one or more of a personal area network (PAN) and/or a body area network (BAN). Each of the devices 102 may be configured to communicate via a wireless link 106. The system 100 may optionally include one or more devices 102 that comprise a longer range network interface, such as a mobile telephone, wireless Ethernet, a wired network, other suitable network interface, that is configured to communicate over a wireless link 108 The devices 102 may comprise devices such as headsets and watches (or other portable devices configured to display information such as caller id from a phone and/or messages (or portions thereof) such as email, short message system (SMS) messages, or any other type of data, including data received over the wireless links 106 and 108. Each of the devices 102 may communicate with one, two, or any number of the other devices 102.

One or more of the devices 102 may detect the presence of the other devices 102 when the other devices 102 initially communicate over the link 106. Two or more devices 102 may be paired through an exchange of messages over the link 106. For example, two devices 102 may pair when one of the two devices 102 first detects (by receiving a message over the wireless link 106) the other device 102. The pairing process may be based at least partly on a user's authorization of the pairing. The paired group of the devices 102 may define a particular personal or body area network.

As discussed further below, in some aspects the communications link 106 has a pulse-based physical layer. For example, the physical layer may utilize ultra-wideband pulses that have a relatively short length (e.g., on the order of a few nanoseconds) and a relatively wide bandwidth. In some aspects, an ultra-wide band may be defined as having a fractional bandwidth on the order of approximately 20% or more and/or having a bandwidth on the order of approximately 500 MHz or more. The fractional bandwidth is a particular bandwidth associated with a device divided by its center frequency. For example, a device according to this disclosure may have a bandwidth of 1.75 GHz with center frequency 8.125 GHz and thus its fractional bandwidth is 1.75/8.125 or 21.5%.

Those skilled in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

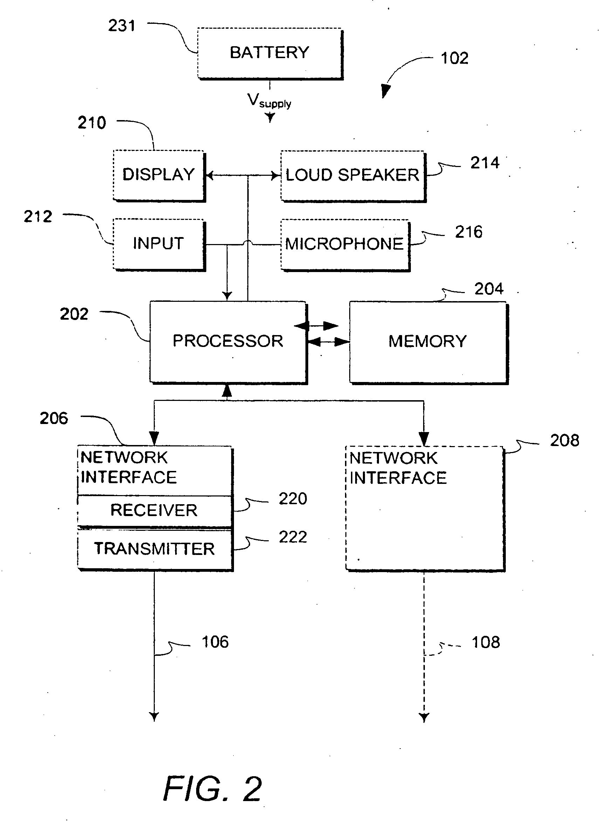

Figure 2 is a block diagram illustrating an example of a wireless device 102. The device 102 includes a processor 202 that is in communication with a memory 204 and a network interface 206 for communicating via the wireless link 106. Optionally, the device 102 may also include one or more of a display 210, a user input device 212 such as a key, touch screen, or other suitable tactile input device, a loudspeaker 214 comprising a transducer adapted to provide audible output based on a signal received over the wireless link 106 and/or a microphone 216 comprising a transducer adapted to provide audible input of a signal that may be transmitted over the wireless link 106. For example, a watch may include the display 210 adapted to provide a visual output based on a signal received via the wireless communication link. A medical device may include one or more input devices 212 that include a sensor adapted to generate at least one sensed signal or sensed data to be transmitted via the wireless communication link 106.

The network interface 206 may include any suitable antenna (not shown), a receiver 220, and a transmitter 222 so that the exemplary device 102 can communicate with one or more devices over the wireless link 106. Optionally, the network interface 206 may also have processing capabilities to reduce processing requirements of the processor 202.

Optionally, the device 102 may include a second network interface 208 that communicates over the network 110 via a link 108. For example, the device 102 may provide connectivity to the other network 110 (e.g., a wide area network such as the Internet) via a wired or wireless communication link. Accordingly, the device 102 may enable other devices 102 (e.g., a Wi-Fi station) to access the other network 110. In addition, it should be appreciated that one or more of the devices 102 may be portable or, in some cases, relatively non-portable. The second network interface 208 may transmit and receive RF signals according to the IEEE 802.11 standard, including IEEE 802.11(a), (b), or (g), the BLUETOOTH standard, and/or CDMA, GSM, AMPS or other known signals that are used to communicate within a wireless cell phone network. In addition, the second network interface 208 may comprise any suitable wired network interface such as Ethernet (IEEE 802.3).

The device 102 may optionally include a battery 231 to provide power to one or more components of the device 102. The device 102 may comprise at least one of a mobile handset, a personal digital assistant, a laptop computer, a headset, a vehicle hands free device, or any other electronic device. In addition, the device 102 may comprise one or more of a biomedical sensor, biometric sensor, a pacemaker, or any other device for measuring or affecting a human body. In particular, the teachings herein may be incorporated into (e.g., implemented within or performed by) a variety of the devices 102. For example, one or more aspects taught herein may be incorporated into a phone (e.g., a cellular phone), a personal data assistant ("PDA"), an entertainment device (e.g., a music or video device), a headset (e.g., headphones, an earpiece, etc.), a microphone, a biometric sensor (e.g., a heart rate monitor, a pedometer, an EKG device, a keyboard, a mouse, etc.), a user I/O device (e.g., a watch, a remote control, a light switch, etc.), a tire pressure monitor, a computer, a point-of-sale device, an entertainment device, a hearing aid, a set-top box, or any other suitable device.

The components described herein may be implemented in a variety of ways. Referring to Figure 2, the device or apparatus 102 is represented as a series of interrelated functional blocks that may represent functions implemented by, for example the processor 202, software, some combination thereof, or in some other manner as taught herein. For example, the processor 202 may facilitate user input via the input devices 212. Further, the transmitter 222 may comprise a processor for transmitting that provides various functionalities relating to transmitting information to another device 102. The receiver 220 may comprises a processor for receiving that provides various functionality relating to receiving information from another device 102 as taught herein.

As noted above, Figure 2 illustrates that in some aspects these components may be implemented via appropriate processor components. These processor components may in some aspects be implemented, at least in part, using structure as taught herein. In some aspects, a processor may be adapted to implement a portion or all of the functionality of one or more of these components. In some aspects one or more of the components represented by dashed boxes are optional.

In some aspects, the device or apparatus 102 may comprise an integrated circuit. Thus, the integrated circuit may comprise one or more processors that provide the functionality of the processor components illustrated in Figure 2. For example, in some aspects a single processor may implement the functionality of the illustrated processor components, while in other aspects more than one processor may implement the functionality of the illustrated processor components. In addition, in some aspects the integrated circuit may comprise other types of components that implement some or all of the functionality of the illustrated processor components.

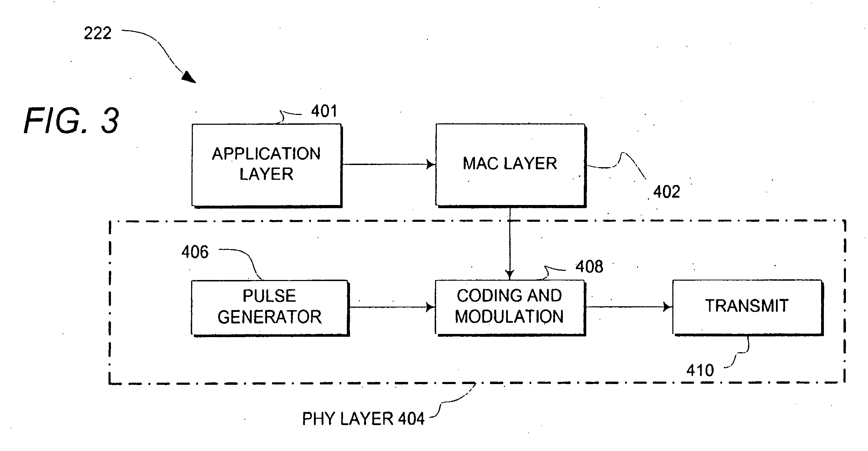

Figure 3 is a block diagram illustrating an example of the transmitter 222 of the device 102. As would be apparent to one of skill in the art, in the illustrated block diagram of Figure 3, logical modules of the device 102 are illustrated in terms of a layered, abstract description for a communications network. As noted below, each layer may comprise one or more logical modules that may be implemented in software, hardware, or any suitable combination of both. The transmitter 222 may include (i) an application layer 401 that provides information to a data link or media access control (MAC) layer 402 for transmission, (ii) a media access control (MAC) layer 402 that receives data from the application layer 401 and provides it to a physical layer 404, and (iii) a physical (PHY) layer 404 that receives data from the MAC layer 402 and transmits the data over the wireless channel 106. In the illustrated transmitter 222, the PHY layer includes a pulse generator 406, a coding and modulation block 408, and a transmit block 410. A phase locked loop (PLL) (not shown) may provide timing signals to the PHY layer. The pulse generator 406 generates waveforms such as Gaussian pulse waveforms. The coding and modulation block 408 codes the information signal provided by the MAC layer 402 using a coding scheme such as convolutional coding, block coding or concatenated coding and modulates the pulse signal based on the coded information signal using a scheme such as pulse position modulation, pulse amplitude modulation, or transmitted reference modulation. The transmit block 410 transmits the modulated pulse signal. Functions of the transmit block 410 may include amplifying the modulated pulse signal for transmission and providing the signal to an antenna.

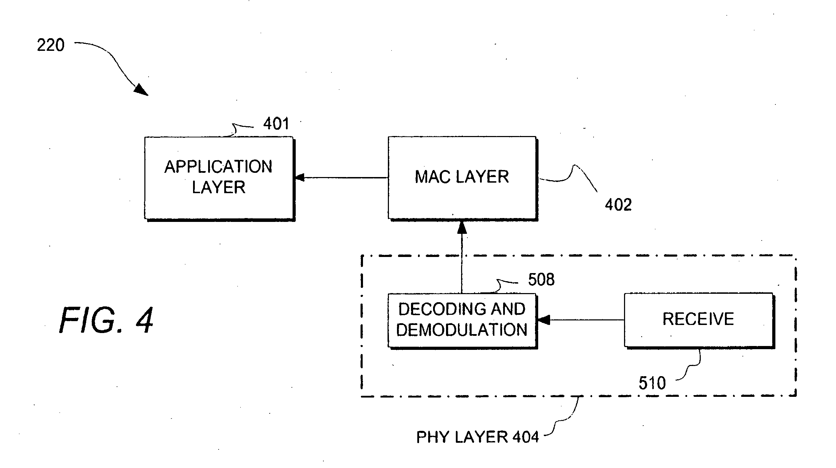

Figure 4 is a block diagram illustrating an example of the receiver 220 of the device 102. As would be apparent to one of skill in the art, in the illustrated block diagram of Figure 4, logical modules of the device 102 are illustrated in terms of a layered, abstract description for a communications network. As noted below, each layer may comprise one or more logical modules that may be implemented in software, hardware, or any suitable combination of both. In Figure 4, the receiver 220 includes the application layer 401 and the MAC layer 402. The PHY layer 404 is in communication with the MAC layer 402. The PHY layer 404 of the receiver includes a demodulation and decoding block 508 and a receive block 510. The receive block 510 may include components (not shown) that may comprise an antenna, a power amplifier, and other suitable receiver components. The receive block 510 receives a wireless signal and provides that signal to the demodulation and decoding block 508, which demodulates and decodes the signal and provides received data to the MAC layer 402.

The receiver 220 and the transmitter 222 may employ a variety of wireless physical layer schemes. For example, the physical layer 404 of the receiver 220 and the transmitter 222 may utilize some form of COMA, TDMA, OFDM, OFDMA, or other modulation and multiplexing schemes.

Power and processor consumption during acquisition and synchronization between devices 102 in the system 100 can be substantial for devices 102 having a low duty cycle, e.g., a low duty cycle device (LDD). A low duty cycle device refers to a device that transmits or receives data only for a relatively small percentage of time that it is in operation. For example a health sensor, may have to execute the synchronization and acquisition operations very often compared to the amount of time it would otherwise be powered and operating. In some aspects, a method and apparatus are provided for reducing power and processor consumption for such acquisition and synchronization.

In one example of the system 100, a particular device 102 may comprise a network controller device (NCD), for example a cell phone. The NCD 102 may transmit a beacon comprising a synchronization signal at regular intervals. When a particular device 102, e.g., a LDD, wakes up, it searches for the beacon to synchronize to the system. To mitigate the effect of inaccuracies in timing, the LDD may have to operate a tracking loop to avoid too much drift. The associated cost in power and processing resources may be significant for some devices 102.

It is to be recognized that the designation of a particular device 102 as an NCD or an LDD is merely for purposes of description of the roles that devices 102 in the system 100 may perform. In particular, particular devices 102 may act as NCDs with respect to one or more other devices 102 and act as LDDs with respect to one or more other devices. Moreover, the roles of NCD and LDD devices may change over time based on changes in available resources. For example, an NCD and LDD may exchange roles when the battery of the NCD discharges beyond a specified level.

In particular, the devices 102 may transmit and receive messages indicative of resource information with other devices 102 in a particular system 100. Each device 102 may compare the resource information it receives from the other devices 102 with its own resource information to determine whether to act as a NCD or an LDD with reference to particular other devices. In one example of the system 100, such resource information is exchanged when the devices 102 are paired to define the system 100. In one example of the system 100, the resource information may also (or alternatively) be shared (and updated) periodically to allow devices 102 to change roles, for example, as their batteries discharge at different rates or as devices 102 are added or removed from the system 100.

Particular devices 102, e.g., NCDs, may have more lenient power and rate constraints than other devices 102 in the system 100. For example, a particular device 102 may comprise a LDD such as a health sensor that is configured to operate for a few months or year without change of battery. For such devices 102, it is desirable to transfer the burden of the synchronization procedure to other devices 102 including devices configured as NCDs.

In one example of the system 100, a particular device such as an LDD initiates a transmission procedure. For example, when the LDD 102 wakes up and has data to transfer or when it is woken up remotely by the another device 102 (e.g., a NCD), the LDD devices 102 sends a synchronization signal to the NCD 102 via the communication link 106. The synchronization signal may comprise a preamble sequence. The NCD 102 initiates acquisition and synchronization procedures and obtains the timing parameters of the LDD based on the preamble sequence.

In one example of the system 100, the NCD 102 may then regularly adjust its timing parameters to match the LDD parameters, thereby allowing the LDD 102 to continue transmitting without any timing parameter adjustments. In another example of the system 100, the NCD 102 may alternatively (or additionally) communicate regular timing updates to the LDD 102. In such examples of the system 100, the LDD 102 adjusts its timing parameters based on these updates. In one example of the system 100, the NCD 102 may communicate with multiple devices 102 including other LDDs 102 by maintaining multiple sets of timing data, e.g., a different set for each LDD.

After transmitting the synchronization signal, the LDD 102 may listen to the communications link 106 for a period of time in expectation of receiving an acknowledgement transmitted back using substantially the same timing parameters such as the timing offset. If it does not receive any valid response, it may go back to sleep, or repeat the message at a suitable interval.

After receiving the synchronization signal, the NCD 102 may transmit a message providing an offset to the LDD 102 to transmit at a different time offset. This message can instruct the LDD 102 to shift communication to a specific channel. Further, the NCD 102 may transmit messages providing data related to broadcast time based modes.

Moreover, the NCD 102 may provide channel and timing assignments to the LDD 102. The NCD 102 may provide timing data updates to the LDD 102 to reduce interference. In addition, the NCD 102 may assign channels to LDDs 102 that reduce interference when those LDDs 102 communicate concurrently with the NCD 102 or with other LDDs 102.

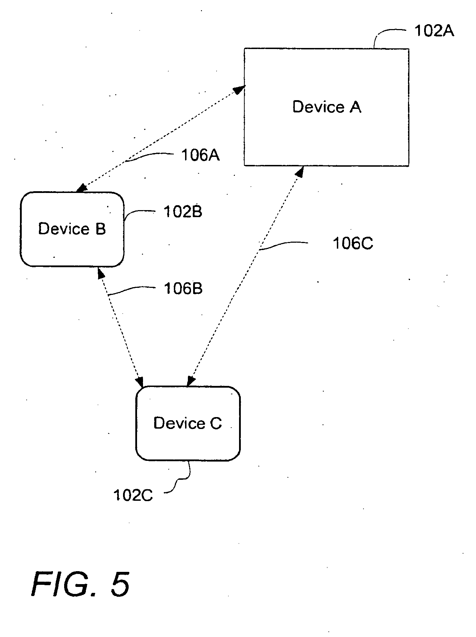

Figure 5 is a block diagram illustrating another example system 100 of wirelessly connected devices 102. Other examples of the system 100 may have any number of devices. In particular, Figure 5 illustrates three devices 102, devices 102A, 102B, and 102C. The device 102A communicates with device 102B via a wireless link 106A and with the device 102C via a wireless link 106C. The device 102B may also communicate with the device 102C via a wireless link 106C. Each of the wireless links 106A may use the same or different communication parameters (e.g., timing offsets and channels).

For illustration, the device 102A may be a NCD while devices 102B and 102C are LDDs. In operation in such a system, each of the devices 102B and 102C transmit their resource information to the device 102A. This resource information can be transmitted when the devices 102A, 102B, and 102C are paired and/or periodically. The device 102A may also transmit its resource information to one or both of the devices 102B and 102C. In one example of the system 100, each of the devices compares its resources to the received resources from the other devices 102 to determine which device transmits a synchronization signal and which should be configured to receive the synchronization signal. The device 102, e.g., device 102A, that is to receive the synchronization signal waits for a synchronization signal such as beacon signal to be transmitted by the device 102B. The device 102B may transmit the synchronization signal to resynchronize with the device 102A, e.g., after the device 102B has been in sleep mode.

In another example of the system 100, certain specified devices, e.g., NCD devices such as the device 102A, perform the comparison and provide instructions, e.g., at pairing, as to whether a particular LDD device such as LDD 102B and 102C should transmit synchronization signals or should be configured to receive such signals, e.g., from the NCD 102A.

In one example of the system 100, the LDDs 102B and 102C may be configured to communicate with each other via the wireless link 106B based on timing and other synchronization data provided by the NCD 102A. For example, both LDDs 102B and 102C may be configured to send synchronization signals to the NCD 102A to establish communication channels 106A and 106C. One or both of the LDDs 102B and 102C may be configured to receive timing and other synchronization information for their shared wireless link 106B from the NCD 102A via the wireless links 106A and 106C. In one example of the system 100, the NCD 102A is configured to transmit messages assigning one or more orthogonal or quasi-orthogonal channels having low interference to LDD devices 102B and 102C. The NCD device 102A can thus provide timing updates to the LDDs 102 to reduce interference in communications between the LDD devices 102A and 102B.

In some examples of the system 100, the NCD 102 may track the LDD 102 when there are many NCDs 102 receiving data from a particular LDD 102. For example, in one example system 100, a particular LDD may relay communications between two portions of a PAN (e.g., between two or more subnets) each having a different NCD 102. In such a system 100, the LDD 102 may determine that it is most efficient for it to generate synchronization and timing for communication to each of the NCDs 102. Thus, the LDD 102 transmits synchronization (e.g., beacon) signal to each of the NCDs 102. Each NCD receives a synchronization signal, performs a synchronization procedure based on the received signal, and tracks the timing of the LDD.

Accordingly, in some aspects, resource consumption associated with acquisition and synchronization can be shifted between devices 102 in the system 100, e.g., from devices 102 that have small power or other resource capabilities to more capable devices 102.

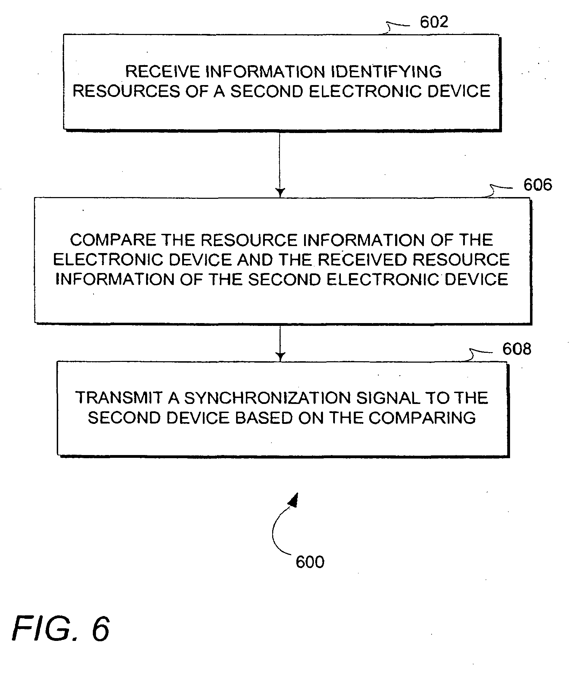

Figure 6 is a flowchart illustrating an example of a method 600 of communicating data such as in the example system 100. The method 600 begins at a block 602 in which the receiver 220 of a first device 102 receives information identifying resources of a second electronic device 102. The transmitter 222 of the first device 102 may also transmit resource information of the first electronic device 102, e.g., to the second electronic device 102. The resource information may include one or more of power resource information and processing resource information. Power resource information may include information relating to the charge status of the battery 231 and the fully charged capacity of the battery 231. The resource information may also include duty cycle information, e.g., whether the device has a resource consumption profile of a low duty cycle device such as a medical device or sensor that wakes periodically to make and transmit a sensor reading. Processing resource information may include, for example, information about the capabilities of the processor 202 and/or the memory 204. The resource information received at the block 602 and transmitted in the block 604 may comprise data in a paring message,

Moving to a block 606, the processor 202 compares the resource information of the electronic device and the received resource information of the second electronic device. For example, the processor 202 may compare resources and determine that the first electronic device has fewer of at least one resource than the second electronic device, e.g., fewer power resources in the form of less battery capacity or reserves. As noted above, the comparison may be performed once at pairing of the first and second devices 102 or each time the first and second devices 102 enter the system 100. Alternatively, or in addition, the devices 102 may exchange resource information periodically so that which device 102 has fewer resources may change over time. In another example, the processor 202 may use a multifactor or weighted comparison of resource information. For example, the comparison may be based on raw resource data (e.g., the battery capacity or reserves of each device), derived data based on resource data (e.g., battery lifetime based on duty cycle data of each device, or battery lifetime desired by each device in view of its duty cycle). Thus, for example, a health sensor device 102 may have a large battery capacity but a low expected duty cycle such that the comparison may identify the health sensor device 102 has fewer resources than a cell phone device 102 that has a similar battery capacity but a higher duty cycle.

In one example of the system 100, each of the first and second devices 102 performs the same or a corresponding comparison according to a predetermined protocol such that each device 102 determines whether to transmit or receive the synchronization signal. In another example, the comparison is performed during pairing, or when each of the devices 102 communicates, with data indicative of the results of the comparison communicated to each device 102 to determine which device 102 transmits and which device 102 receives the synchronization signal. In one example of the system 100, a third device 102 receives resource information of each of the first and second devices 102, performs the comparison, makes a determination as to which device 102 should transmit the synchronization signal and provides the devices 102 with that determination.

Proceeding to a block 608, the transmitter 222 transmits a synchronization signal to the second device subsequent to the comparing of block 606. For example, in one example of the system 100, maintaining timing data for communicating with a second electronic device may be costly in terms of power consumption and increased duty cycle to receive such data. A low duty cycle device 102 may reduce such overhead by transmitting a synchronization signal to another device 102 such that the receiving device 102 determines and maintains communication synchronization, e.g., configures itself to use the transmitters timing parameters. In such an example device, the transmitter 222 of the first device 102 may be configured to transmit the synchronization signal when the electronic device 102 has fewer power or battery resources than the second electronic device 102 and thus would benefit from reduced receiving and transmission overhead of maintaining timing synchronization with the second electronic device 102. The synchronization signal may include a beacon signal. The first device 102 may additionally receive and transmit data to the second device 102 based on timing and other synchronization data communicated or derived from the synchronization signal.

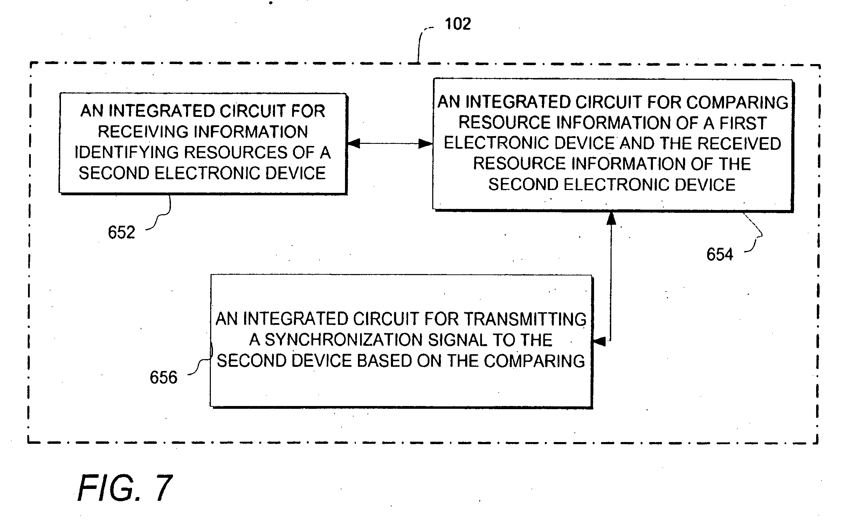

Figure 7 is a block diagram illustrating an example of the device 102 that communicates using the method 600 of Figure 6. In the illustrated example, the device 102 comprises a means or an integrated circuit (IC) 652 for receiving information identifying resources of a second electronic device 102. The IC 652 may comprise the receiver 220 of Figures 2 and 4. The device 102 also comprises a means or an IC 654 for comparing resource information of the electronic device 102 and the received resource information of the second electronic device 102. The IC 654 may comprise the processor 202 of Figure 2. The device 102 also comprises a means or an IC 656 for transmitting a synchronization signal to the second device subsequent to the comparing performed by the IC 654. The IC 656 may comprise the transmitter 222 of Figures 2 and 3. The IC 565 may also be configured to transmit the resource information of the electronic device 102.

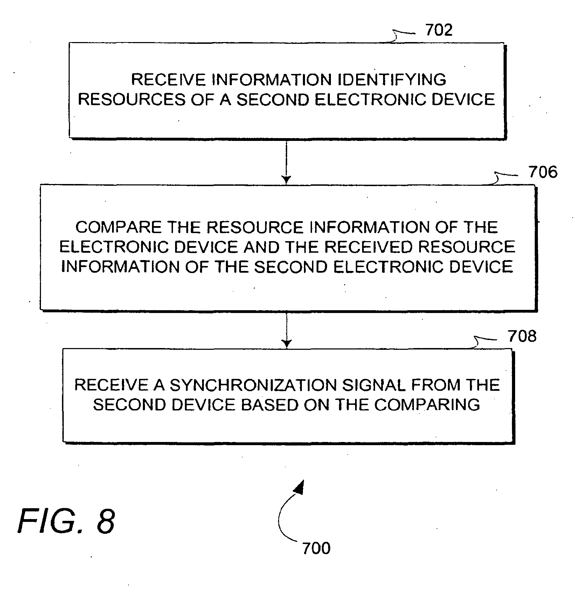

Figure 8 is a flowchart illustrating an example of a method 700 of communicating data such as in the example system 100. The method 700 begins at a block 702 in which the receiver 220 of a first device 102 receives information identifying resources of a second electronic device 102. The resource information may include one or more of power resource information and processing resource information. Power resource information may include information relating to the charge status of the battery 231 and the fully charged capacity of the battery 231. The resource information may also include duty cycle information, e.g., whether the device has a resource consumption profile of a low duty cycle device such as a medical device or sensor that wakes periodically to make and transmit a sensor reading. Processing resource information may include, for example, information about the capabilities of the processor 202 and/or the memory 204, The resource information may comprise data received in a pairing message. The transmitter 222 of the first device 102 may also transmit resource information of the first electronic device 102.

Moving to a block 706, the processor 202 compares the resource information of the electronic device and the received resource information of the second electronic device. For example, the processor 202 may determine that the first electronic device has more of at least one resource than the second electronic device, e.g., more power resources in the form of greater battery capacity or reserves. Proceeding to a block 708, the receiver 222 receives a synchronization signal from the second device subsequent to the comparing of block 606. For example, in one example of the system 100, maintaining timing or other synchronization data in the second electronic device may be costly in terms of power consumption and increased duty cycle to receive such data. A low duty cycle device 102 may reduce such overhead by transmitting a synchronization signal to another device 102 such that the receiving device 102 determines and maintains communication synchronization, e.g., configures itself to use the transmitters timing parameters. In such an example device, the receiver 220 of the receiving device 102 may be configured to receive the synchronization signal when the electronic device 102 has greater power or battery resources than the second electronic device 102 and thus overall system performance benefits from reduced receiving and transmission overhead of maintaining timing synchronization with the second electronic device 102. The synchronization signal may include a beacon signal. The receiving device 102 may additionally receive and transmit data to the second, e.g., low-duty cycle, device 102 based on timing and other synchronization data communicated or derived from the synchronization signal received from the second electronic device.

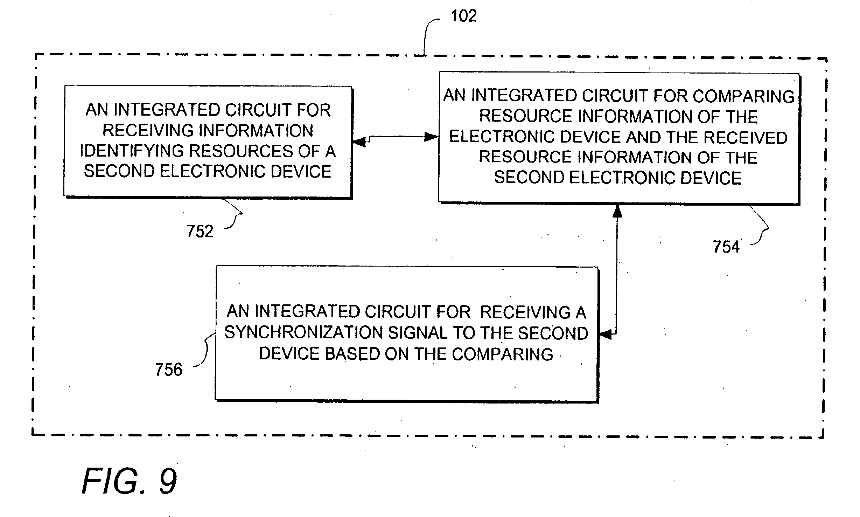

Figure 9 is a block diagram illustrating an example of the device 102 that communicates using the method 700 of Figure 8. In the illustrated example, the device 102 comprises a means or an integrated circuit (IC) 752 for receiving information identifying resources of a second electronic device 102. The IC 752 may comprise the receiver 220 of Figures 2 and 4. The device 102 also comprises a means or an IC 754 for comparing resource information of the electronic device 102 and the received resource information of the second electronic device 102. The IC 754 may comprise the processor 202 of Figure 2. In addition, the IC 752 may comprise a means of receiving a synchronization signal transmitted from the second device subsequent to the comparing performed by the IC 754. The device 102 may also comprise a means or an IC (not shown) for transmitting the resource information of the electronic device 102. Such a transmitting means may comprise the transmitter 222 of Figures 2 and 3.

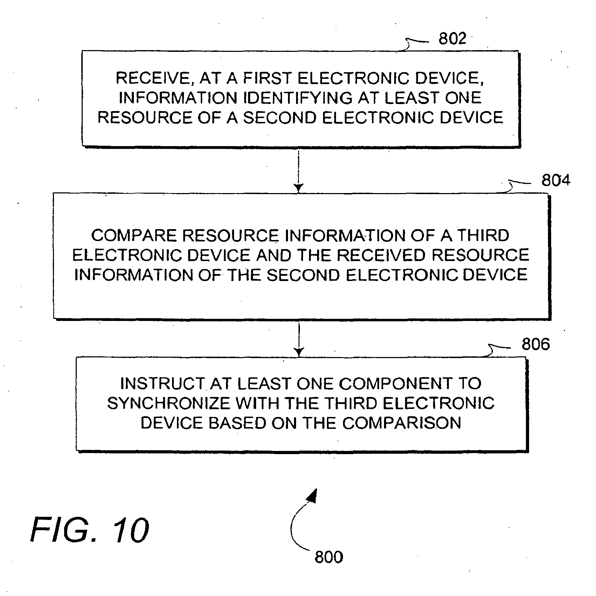

Figure 10 is a flowchart illustrating an example of a method 800 of communicating data such as in the example system 100. The method 800 begins at a block 802 in which the receiver 220 of a first device 102, e.g., the device 102a of Figure 5, receives information identifying resources of a second electronic device 102b. Next at a block 804, the processor 202 (e.g., of the device 102a) compares resource information of a third electronic device 102c and the received resource information of the second electronic device 102b. Moving to a block 806, the processor 204 of instructs at least one component to synchronize with the third electronic device 102c based on the comparison. The component may comprise a portion (e.g., the processor 202, the receiver 220, or the transmitter 222) of the device 102b or the device 102a.

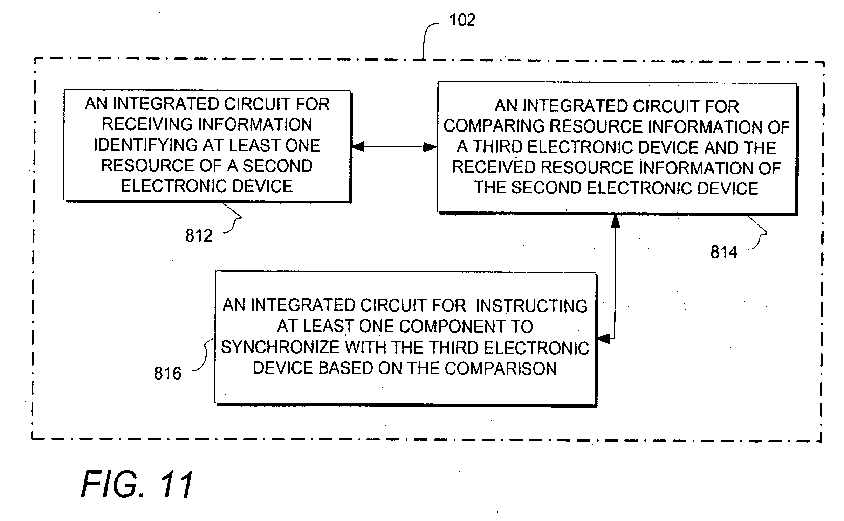

Figure 11 is a block diagram illustrating an example of the device 102 that communicates using the method 800 of Figure 10. In the illustrated example, the device 102, e.g., the device 102a of Figure 5, comprises a means or an integrated circuit (IC) 812 for receiving information identifying resources of a second electronic device 102. The IC 812 may comprise the receiver 220 of Figures 2 and 4. The device 102 also comprises a means or an IC 814 for comparing resource information of a third electronic device 102c and the received resource information of the second electronic device 102b. The IC 814 may comprise the processor 202 of Figure 2. The device 102 also comprises a means or an IC 816 for instructing at least one component to synchronize with the third electronic device 102c based on the comparison. The component may comprise a portion (e.g., the processor 202, the receiver 220, or the transmitter 222) of the device 102b or the device 102a. The instructing means may comprise the processor 202 and, optionally, the transmitter 222 of Figures 2 and 3.

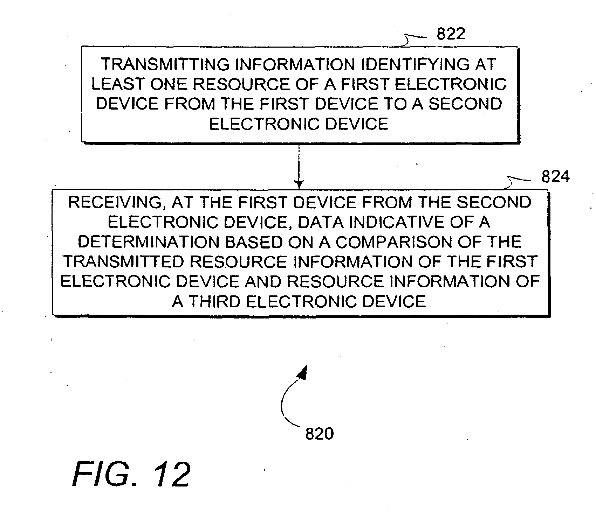

Figure 12 is a flowchart illustrating an example of a method 820 of communicating data such as in the example system 100. The method 820 begins at a block 822 in which the transmitter 222 of a first device 102, e.g., the device 102b of Figure 5, transmits information identifying at least one resource of a first electronic device 102b from the first device 102b to a second electronic device 102a. Next at a block 824, the receiver 220 of the device 102b receives, from the second electronic device 102a, data indicative of a determination based on comparing the transmitted resource information of the first electronic device 102b and resource information of a third electronic device 102c.

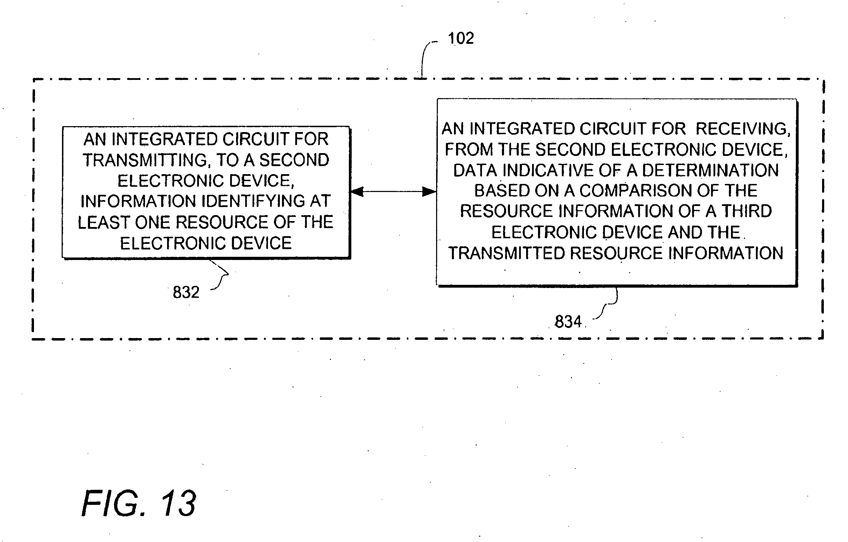

Figure 13 is a block diagram illustrating an example of the device 102 that communicates using the method 820 of Figure 12. In the illustrated example, the device 102, e.g., the device 102b of Figure 5, comprises a means or an integrated circuit (IC) 832 for transmitting, to a second electronic device 102a, information identifying at least one resource of the electronic device 102b. The IC 832 may comprise the transmitter 222 of Figures 2 and 3. The device 102 also comprises a means or an IC 834 for receiving, from the second electronic device 102a, data indicative of a determination based on comparing the resource information of a third electronic device 102c and the transmitted resource information of the device 102b. Such a receiving means may comprise the receiver 220 of Figures 2 and 4.

In view of the above, one will appreciate that the disclosure addresses how to communicate data, such as a UWB system. For example, the illustrated aspects provide a lower overhead method and apparatus of multi-hop communications. For example, power consumption on a low duty cycle device can be reduced by minimizing overhead for receiving and maintaining synchronization with other devices.

Any illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

Those skilled in the art will recognize that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of this disclosure.

The steps of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

While the above detailed description has shown, described, and pointed out novel features of the invention as applied to various aspects, it will be understood that various omissions, substitutions, and changes in the form and details of the device or process illustrated may be made by those skilled in the art without departing from the scope of this disclosure. As will be recognized, the invention may be embodied within a form that does not provide all of the features and benefits set forth herein, as some features may be used or practiced separately from others. The scope of this disclosure is defined by the appended claims.

### SUMMARY OF THE INVENTION

1. A method of wireless communications, comprising:
   receiving, at a first electronic device, information identifying at least one resource of a second electronic device;
   comparing resource information of the first electronic device and the received resource information of the second electronic device; and
   transmitting a synchronization signal to the second electronic device based on the comparison.
2. The method of 1, further comprising transmitting the resource information of the first electronic device to the second electronic device.
3. The method of 1, further comprising periodically transmitting the resource information of the first device to the second device.
4. The method of 1, wherein the synchronization signal is transmitted if the comparison indicates that the first electronic device has less or more of at least one resource than the second electronic device.
5. The method of 1, wherein the synchronization signal comprises a beacon signal.
6. The method of 1, wherein the resource information of each of the first and second devices comprises power resource information.
7. The method of 1, wherein the resource information of each of the first and second devices comprises processing resource information.
8. The method of 1, wherein the synchronization signal comprises at least one timing parameter.
9. The method of 1, further comprising receiving data transmitted from the second device in response to the transmitted synchronization signal.
10. The method of 9, wherein the data comprises at least one timing parameter.
11. The method of 1 further comprising transmitting the resource information of the first device in response to a pairing message from another device.
12. The method of 1, wherein synchronization signal the transmitted signal comprises at least one pulse.
13. The method of 12, wherein the at least one pulse has a fractional bandwidth of at least about 20%, has a bandwidth of at least about 500 MHz, or has a fractional bandwidth of at least about 20% and has a bandwidth of at least about 500 MHz or more.
14. An electronic device for wireless communications, comprising:
   a receiver configured to receive information identifying at least one resource of a second electronic device;
   a processor configured to perform a comparison of resource information of the electronic device and the received resource information of the second electronic device; and
   a transmitter configured to transmit a synchronization signal to the second device based on the comparison.
15. The device of 14, wherein the transmitter is further configured to transmit the resource information of the electronic device to the second electronic device.
16. The device of 14, wherein the transmitter is configured to periodically transmit the resource information of the electronic device to the second device.
17. The device of 14, wherein the synchronization signal is transmitted if the comparison indicates that the electronic device has less or more of at least one resource than the second electronic device.
18. The device of 14, wherein the synchronization signal comprises a beacon signal.
19. The device of 14, wherein the resource information of each of the electronic device and of the second device comprises power resource information.
20. The device of 14, wherein the resource information of each of the electronic device and of the second device comprises processing resource information.
21. The device of 14, wherein the synchronization signal comprises at least one timing parameter.
22. The device of 14, wherein the receiver is configured to receive a data transmitted from the second device in response to the transmitted synchronization signal.
23. The device of 22, wherein the data comprises at least one timing parameter.
24. The device of 14, wherein the transmitter is configured to transmit the resource information of the electronic device in response to a pairing message from another device.
25. The device of 14, wherein the transmitted synchronization signal comprises at least one pulse.
26. The device of 25, wherein the at least one pulse has a fractional bandwidth of at least about 20%, has a bandwidth of at least about 500 MHz, or has a fractional bandwidth of at least about 20% and has a bandwidth of at least about 500 MHz or more.
27. An electronic device for wireless communications, comprising:
   means for receiving information identifying at least one resource of a second electronic device;
   means for comparing resource information of the electronic device and the received resource information of the second electronic device; and
   means for transmitting a synchronization signal to the second device based on the comparison.
28. The device of 27, wherein the transmitting means is further configured to transmit the resource information of the electronic device to the second electronic device.
29. The device of 27, wherein the transmitting means is configured to periodically transmit the resource information of the electronic device to the second device.
30. The device of 27, the synchronization signal is transmitted if the comparison indicates that the electronic device has less or more of at least one resource than the second electronic device.
31. The device of 27, wherein the synchronization signal comprises a beacon signal.
32. The device of 27, wherein the resource information of each of the electronic device and of the second device comprises power resource information.
33. The device of 27, wherein the resource information of each of the electronic device and of the second device comprises processing resource information.
34. The device of 27, wherein the synchronization signal comprises at least one timing parameter.
35. The device of 27, wherein the receiving means is configured to receive data from the second device in response to the transmitted synchronization signal.
36. The device of 35, wherein the data comprises at least one timing parameter.
37. The device of 27, wherein the transmitting means is configured to transmit the resource information of the electronic device in response to a pairing message from another device.
38. The device of 27, wherein the transmitted synchronization signal comprises at least one pulse.
39. The device of 38, wherein the at least one pulse has a fractional bandwidth of at least about 20%, has a bandwidth of at least about 500 MHz, or has a fractional bandwidth of at least about 20% and has a bandwidth of at least about 500 MHz or more.
40. A computer-program product for wireless communications, comprising:
   computer-readable medium comprising codes executable by at least one computer to:
      receive, at a first electronic device, information identifying at least one resource of a second electronic device;
      compare resource information of the first electronic device and the received resource information of the second electronic device; and
      transmit a synchronization signal to the second device based on the comparison.
41. A headset for wireless communications, comprising:
   a microphone adapted to provide sensed data;
   a receiver configured to receive information identifying at least one resource of an electronic device;
   a processor configured to perform a comparison of resource information of the headset and the received resource information of the electronic device; and
   a transmitter configured to transmit a synchronization signal to the electronic device based on the comparison, wherein the transmitter is further configured to transmit the sensed data.
42. A medical device for wireless communications, comprising:
   a sensor adapted to provide sensed data;
   a receiver configured to receive information identifying at least one resource of an electronic device;
   a processor configured to perform a comparison of resource information of the medical device and the received resource information of the electronic device; and
   a transmitter configured to transmit a synchronization signal to the electronic device based on the comparison, wherein the transmitter is further configured to transmit the sensed data.
43. A watch for wireless communications, comprising:
   a receiver configured to receive information identifying at least one resource of an electronic device;
   a processor configured to perform a comparison of resource information of the watch and the received resource information of the electronic device;
   a transmitter configured to transmit a synchronization signal to the electronic device based on the comparison; and
   a display adapted to provide a visual output based on data received via the receiver.
44. A method of wireless communications, comprising:
   receiving, at a first electronic device, information identifying at least one resource of a second electronic device;
   comparing resource information of the first electronic device and the received resource information of the second electronic device; and
   receiving a synchronization signal from the second device based on the comparison.
45. The method of 44, further comprising transmitting data to the second electronic device based on at one least one communication parameter derived from the received synchronization signal.
46. The method of 45, wherein the data comprises at least one timing parameter.
47. The method of 44, wherein the comparison comprises determining whether the first electronic device has less or more of at least one resource than the second electronic device.
48. The method of 44, wherein the synchronization signal comprises a beacon signal.
49. The method of 44, wherein the resource information of each of the first and second devices comprises power resource information.
50. The method of 44, wherein the resource information of each of the first and second devices comprises processing resource information.
51. The method of 44, wherein the synchronization signal comprises receiving at least one timing parameter.
52. The method of 44, further comprising periodically transmitting the resource information of the first device to the second device
53. The method of 44 further comprising transmitting the resource information of the first device in response to a pairing message from another device.
54. The method of 44, wherein the signal comprises at least one pulse.
55. The method of 54, wherein the at least one pulse has a fractional bandwidth of at least about 20%, has a bandwidth of at least about 500 MHz, or has a fractional bandwidth of at least about 20% and has a bandwidth of at least about 500 MHz or more.
56. An electronic device for wireless communications, comprising:
   a receiver configured to receive information identifying at least one resource of a second electronic device; and
   a processor configured to perform a comparison of resource information of the electronic device and the received resource information of the second electronic device,
   wherein the receiver is further configured to receive a synchronization signal from the second device based on the comparison.
57. The device of 56, further comprising a transmitter configured to transmit data to the second electronic device based on communication parameters derived from the received synchronization signal.
58. The device of 57, wherein the data comprises at least one timing parameter.
59. The device of 56, wherein performing the comparison comprises determining that the electronic device has less or more of at least one resource than the second electronic device.
60. The device of 56, wherein the synchronization signal comprises a beacon signal.
61. The device of 56, wherein the resource information of each of the electronic device and second device comprises power resource information.
62. The device of 56, wherein the resource information of each of the electronic device and second device comprises processing resource information.
63. The device of 56, wherein the synchronization signal comprises at least one timing parameter.
64. The device of 56, wherein the receiver is configured to periodically receive the resource information of the second device from the second device.
65. The device of 56, wherein the receiver is configured to receive the resource information of the second device in response to a pairing message transmitted by the electronic device.
66. The device of 56, wherein the received signals comprises at least one pulse.
67. The device of 66, wherein the at least one pulse has a fractional bandwidth of at least about 20%, has a bandwidth of at least about 500 MHz, or has a fractional bandwidth of at least about 20% and has a bandwidth of at least about 500 MHz or more.
68. An electronic device wireless communications, comprising:
   means for receiving information identifying at least one resource of a second electronic device;
   means for comparing resource information of the electronic device and the received resource information of the second electronic device; and
   means for receiving a synchronization signal from the second device based on the comparing.
69. The device of 68, further comprising means for transmitting data to the second electronic device based on communication parameters derived from the received synchronization signal.
70. The device of 69, wherein the data comprises at least one timing parameter.
71. The device of 68, wherein comparing means is configured to determine that the electronic device has less or more of at least one resource than the second electronic device.
72. The device of 68, wherein the synchronization signal comprises a beacon signal.
73. The device of 68, wherein the resource information of each of the electronic device and second device comprises power resource information.
74. The device of 68, wherein the resource information of each of the electronic device and second device comprises processing resource information.
75. The device of 68, wherein the synchronization signal comprises at least one timing parameter.
76. The device of 68, wherein the receiving means is configured to periodically receive the resource information of the second device from the electronic device.
77. The device of 68, wherein the receiving means is configured to receive the resource information of the second in response to a pairing message transmitted by the electronic device.
78. The device of 68, wherein the received signal comprises at least one pulse.
79. The device of 78, wherein the at least one pulse has a fractional bandwidth of at least about 20%, has a bandwidth of at least about 500 MHz, or has a fractional bandwidth of at least about 20% and has a bandwidth of at least about 500 MHz or more.
80. A computer-program product for wireless communications, comprising:
   computer-readable medium comprising codes executable by at least one computer to:
      receive, at a first electronic device, information identifying at least one resource of a second electronic device;
      compare resource information of the first electronic device and the received resource information of the second electronic device; and
      receive a synchronization signal from the second device based on the comparison.
81. A headset for wireless communications, comprising:
   a microphone adapted to provide sensed data;
   a receiver configured to receive information identifying at least one resource of an electronic device;
   a processor configured to perform a comparison of resource information of the headset and the received resource information of the electronic device,
   wherein the receiver is further configured to receive a synchronization signal from the electronic device based on the comparison; and
   a transmitter configured to transmit sensed data based on the received synchronization signal.
82. A medical device for wireless communications, comprising:
   a sensor adapted to provide sensed data;
   a receiver configured to receive information identifying at least one resource of an electronic device;
   a processor configured to perform a comparison of resource information of the medical device and the received resource information of the electronic device,
   wherein the receiver is further configured to receive a synchronization signal from the electronic device based on the comparison; and
   a transmitter configured to transmit sensed data based on the received synchronization signal.
83. A watch for wireless communications, comprising:
   a receiver configured to receive information identifying at least one resource of an electronic device;
   a processor configured to perform a comparison of resource information of the watch and the received resource information of the electronic device,
   wherein the receiver is further configured to receive a synchronization signal from the electronic device based on the comparison; and
   a display adapted to provide a visual output based on data received via the receiver.
84. A method of wireless communications, comprising:
   receiving, at a first electronic device, information identifying at least one resource of a second electronic device;
   comparing resource information of a third electronic device and the received resource information of the second electronic device; and
   instructing at least one component to synchronize with the third electronic device based on the comparison.
85. The method of 84, wherein the first electronic device comprises the component.
86. The method of 84, wherein the second electronic device comprises the component.
87. The method of 86, wherein the instruction comprises transmitting a signal to the component of the second electronic device.
88. The method of 87, wherein the signal comprises at least one timing parameter for communication between the second and third electronic devices.
89. The method of 87, wherein the signal comprises an instruction to transmit a synchronization signal to the third electronic device.
90. The method of 84, wherein the received signal comprises at least one pulse.
91. The method of 90, wherein the at least one pulse has a fractional bandwidth of at least about 20%, has a bandwidth of at least about 500 MHz, or has a fractional bandwidth of at least about 20% and has a bandwidth of at least about 500 MHz or more.
92. An electronic device for wireless communications, comprising:
   a receiver configured to receive information identifying at least one resource of a second electronic device;
   a processor configured to:
      perform a comparison of resource information of a third electronic device and the received resource information of the second electronic device; and
      instruct at least one component to synchronize with the third electronic device based on the comparison.
93. The device of 92, wherein the electronic device comprises the component.
94. The device of 92, wherein the second electronic device comprises the component.
95. The device of 94, wherein the electronic device further comprises a transmitter, and wherein the instruction comprises transmitting a signal to the component of the second device.
96. The device of 95, wherein the signal comprises at least one timing parameter for communication between the second and third electronic device.
97. The device of 95, wherein the signal comprises an instruction to transmit a synchronization signal to the third electronic device.
98. The device of 92, wherein the received signal comprises at least one pulse.
99. The method of 98, wherein the at least one pulse has a fractional bandwidth of at least about 20%, has a bandwidth of at least about 500 MHz, or has a fractional bandwidth of at least about 20% and has a bandwidth of at least about 500 MHz or more.
100. An electronic device for wireless communications, comprising:
   means for receiving information identifying at least one resource of a second electronic device;
   means for comparing resource information of a third electronic device and the received resource information of the second electronic device; and
   means for instructing at least one component to synchronize with the third electronic device based on the comparison.
101. The device of 100, wherein the electronic device comprises the component.
102. The device of 100, wherein the second electronic device comprises the component.
103. The device of 102, wherein the means for instructing transmits a signal regarding the synchronization to the component of the second device.
104. The device of 103, wherein the signal comprises at least one timing parameter for communication between the second and third electronic device.
105. The device of 103, wherein the signal comprises an instruction to transmit a synchronization signal to the third electronic device.
106. The device of 100, wherein the received signal comprises at least one pulse.
107. The device of 106, wherein the at least one pulse has a fractional bandwidth of at least about 20%, has a bandwidth of at least about 500 MHz, or has a fractional bandwidth of at least about 20% and has a bandwidth of at least about 500 MHz or more.
108. A headset for wireless communications, comprising:
   a microphone adapted to provide sensed data;
   a transmitter configured to transmit the sensed data;
   a receiver configured to receive information identifying at least one resource of a first electronic device; and
   a processor configured to:
      perform a comparison of resource information of a second electronic device and the received resource information of the first electronic device; and
      instruct at least one component to synchronize with the second electronic device based on the comparison.
109. A medical device for wireless communications, comprising:
   a sensor adapted to provide sensed data;
   a transmitter configured to transmit the sensed data;
   a receiver configured to receive information identifying at least one resource of a first electronic device; and
   a processor configured to:
      perform a comparison of resource information of a second electronic device and the received resource information of the first electronic device; and
      instruct at least one component to synchronize with the second electronic device based on the comparison.
110. A watch for wireless communications, comprising:
   a receiver configured to receive information identifying at least one resource of a first electronic device;
   a processor configured to:
      perform a comparison of resource information of a second electronic device and the received resource information of the first electronic device; and
      instruct at least one component to synchronize with the second electronic device based on the comparison; and
   a display adapted to provide a visual output based on data received via the receiver.
111. A method of wireless communications, comprising:
   transmitting information identifying at least one resource of a first electronic device from such first electronic device to a second electronic device; and
   receiving, at the first electronic device, from the second electronic device data indicative of a determination based on a comparison of the transmitted resource information of the first electronic device and resource information of a third electronic device.
112. The method of 111, further comprising:
   transmitting a synchronization signal from the first electronic device to the third electronic device based on the received determination.
113. The method of Claim 111, wherein the received data comprises at least one timing parameter.
114. The method of Claim 113, further comprising:
   transmitting a signal from the first device to the third electronic device based on the at least one timing parameter.
115. The method of 113, further comprising:
   receiving a signal from the third device at the first electronic device based on the at least one timing parameter.
116. The method of 111, wherein the second electronic device and the third electronic device are the same device.
117. The method of 111, wherein the data indicative of the determination comprises a synchronization signal.
118. The method of 111, wherein the received data comprises at least one pulse.
119. The method of 118, wherein the at least one pulse has a fractional bandwidth of at least about 20%, has a bandwidth of at least about 500 MHz, or has a fractional bandwidth of at least about 20% and has a bandwidth of at least about 500 MHz or more.
120. An electronic device for wireless communications, comprising:
   a transmitter configured to transmit, to a second electronic device, information identifying at least one resource of the electronic device; and
   a receiver configured to receive, from the second electronic device, data indicative of a determination based on a comparison of the resource information of a third electronic device and the transmitted resource information.
121. The device of 120, wherein the transmitter is further configured to transit a synchronization signal to the third electronic device based on the received determination.
122. The device of 120, wherein the received data comprises at least one timing parameter.
123. The device of 122, wherein the transmitter is further configured to transmit a signal from the first device to the third electronic device based on the at least one timing parameter.
124. The device of 122, wherein the receiver is further configured to receive a signal from the third device at the first electronic device based on the at least one timing parameter.
125. The device of 120, wherein the second electronic device and the third electronic device are the same device.
126. The device of 120, wherein the data indicative of the determination comprises a synchronization signal.
127. The method of 120, wherein the received data comprises at least one pulse.
128. The method of 127, wherein the at least one pulse has a fractional bandwidth of at least about 20%, has a bandwidth of at least about 500 MHz, or has a fractional bandwidth of at least about 20% and has a bandwidth of at least about 500 MHz or more.
129. An electronic device for wireless communications, comprising:
   means for transmitting, to a second electronic device, information identifying at least one resource of the electronic device; and
   means for receiving, from the second electronic device, data indicative of a determination based on a comparison of the resource information of a third electronic device and the transmitted resource information.
130. The device of 129, wherein the transmitting means is further configured to transmit a synchronization signal to the third electronic device based on the received determination.
131. The device of 129, wherein the received data comprises at least one timing parameter.
132. The device of 130, wherein the transmitting means is further configured to transmit a signal from the first device to the third electronic device based on the at least one timing parameter.
133. The device of 130, wherein the receiving means is further configured to receive a signal from the third device at the first electronic device based on the at least one timing parameter.
134. The device of 129, wherein the second electronic device and the third electronic device are the same device.
135. The device of 129, wherein the data indicative of the determination comprises a synchronization signal.
136. The device of 129, wherein the received data comprises at least one pulse.
137. The device of 136, wherein the at least one pulse has a fractional bandwidth of at least about 20%, has a bandwidth of at least about 500 MHz, or has a fractional bandwidth of at least about 20% and has a bandwidth of at least about 500 MHz or more.
138. A headset for wireless communications, comprising:
   a microphone adapted to provide sensed data;
   a transmitter configured to transmit the sensed data and further configured to transmit, to a second electronic device, information identifying at least one resource of the electronic device; and
   a receiver configured to receive, from the second electronic device, data indicative of a determination based on a comparison of the resource information of a third electronic device and the transmitted resource information.
139. A medical device for wireless communications, comprising:
   a sensor adapted to provide sensed data;
   a transmitter configured to transmit the sensed data and further configured to transmit, to a second electronic device, information identifying at least one resource of the electronic device; and
   a receiver configured to receive, from the second electronic device, data indicative of a determination based on a comparison of the resource information of a third electronic device and the transmitted resource information.
140. A watch for wireless communications, comprising:
   a transmitter configured to transmit, to a second electronic device, information identifying at least one resource of the electronic device; and
   a receiver configured to receive, from the second electronic device, data indicative of a determination based on a comparison of the resource information of a third electronic device and the transmitted resource information; and
   a display adapted to provide a visual output based on data received via the receiver.

## Claims

1. A method (700) of wireless communications, comprising:
receiving (702), at a first electronic device (102A), information identifying at least one resource of a second electronic device (102B, 102C);
transmitting, from the first electronic device (102A), information identifying at least one resource of the first electronic device (102A) to the second electronic device (102A, 102B);
comparing (706), at the first electronic device (102A), resource information of the first electronic device and the received resource information of the second electronic device (102B, 102C); and
receiving (708), at the first electronic device (102A), a synchronization signal from the second electronic device (102B, 102C) based on the comparison, if the comparison determines that the first electronic device (102A) has more of at least one resource than the second electronic device (102B, 102C).

2. The method (700) of Claim 1, further comprising transmitting data to the second electronic device based on at one least one communication parameter derived from the received synchronization signal.

3. The method (700) of Claim 2, wherein the data comprises at least one timing parameter.

4. The method (700) of Claim 1, wherein the synchronization signal comprises a beacon signal.

5. The method (700) of Claim 1, wherein the resource information of each of the first and second devices comprises power resource information.

6. The method (700) of Claim 1, wherein the resource information of each of the first and second devices comprises processing resource information.

7. The method (700) of Claim 1, wherein the synchronization signal comprises receiving at least one timing parameter.

8. The method (700) of Claim 1, further comprising periodically transmitting the resource information of the first device to the second device.

9. The method (700) of Claim 1 further comprising transmitting the resource information of the first device in response to a pairing message from another device.

10. The method (700) of Claim 1, wherein the signal comprises at least one pulse.

11. An electronic device (102A) for wireless communications, comprising:
means (752) for receiving information identifying at least one resource of a second electronic device (102B, 102C);
means for transmitting information identifying at least one resource of the first electronic device (102A) to the second electronic device (1 02A, 102B);
means (754) for comparing resource information of the electronic device (102A) and the received resource information of the second electronic device (102B, 102C); and
means (756) for receiving a synchronization signal from the second electronic device (102B, 102C) based on the comparing, if the comparing means (754) determines that the electronic device (102A) has more of at least one resource than the second electronic device (102B, 102C).

12. The device (102A) of Claim 11, further comprising means for transmitting data to the second electronic device based on communication parameters derived from the received synchronization signal.

13. The device (102A) of Claim 12, wherein the data comprises at least one timing parameter.

14. The device (102A) of Claim 11, wherein the synchronization signal comprises a beacon signal.

15. The device (102A) of Claim 11, wherein the resource information of each of the electronic device and second device comprises power resource information.

16. The device (102A) of Claim 11, wherein the resource information of each of the electronic device and second device comprises processing resource information.

17. The device (102A) of Claim 11, wherein the synchronization signal comprises at least one timing parameter.

18. The device (102A) of Claim 11, wherein the receiving means is configured to periodically receive the resource information of the second device from the electronic device.

19. The device (1 02A) of Claim 11, wherein the receiving means is configured to receive the resource information of the second in response to a pairing message transmitted by the electronic device.

20. The device (102A) of Claim 11, wherein the received signal comprises at least one pulse.

21. The device (102A) of Claim 20, wherein the at least one pulse has a fractional bandwidth of at least about 20%, has a bandwidth of at least about 500 MHz, or has a fractional bandwidth of at least about 20% and has a bandwidth of at least about 500 MHz or more.

22. A computer-program product for wireless communications, comprising computer-readable medium comprising codes executable by at least one computer to perform the method of any one of claims 1 to 10.

## Patentansprüche

1. Ein Verfahren (700) für drahtlose Kommunikationen, das folgende Schritte aufweist:
Empfangen (702), an einem ersten elektronischen Gerät (102A), von Informationen, die wenigstens eine Ressource eines zweiten elektronischen Geräts (102B, 102C) identifizieren,
Senden, von dem ersten elektronischen Gerät (102A), von Informationen, die wenigstens eine Ressource des ersten elektronischen Geräts (102A) identifizieren, an das zweite elektronische Gerät (102A, 102B),
Vergleichen (706), an dem ersten elektronischen Gerät (102A), der Ressourceninformationen des ersten elektronischen Geräts mit den empfangenen Ressourceninformationen des zweiten elektronischen Geräts (102B, 102C), und
Empfangen (708), an dem ersten elektronischen Gerät (102A), eines Synchronisationssignals von dem zweiten elektronischen Gerät (102B, 102C) basierend auf dem Vergleich, wenn der Vergleich bestimmt, dass das erste elektronische Gerät (102A) mehr von wenigstens einer Ressource aufweist als das zweite elektronische Gerät (102B, 102C).

2. Verfahren (700) nach Anspruch 1, das weiterhin das Senden von Daten an das zweite elektronische Gerät basierend auf wenigstens einem aus dem empfangenen Synchronisationssignal abgeleiteten Kommunikationsparameter aufweist.

3. Verfahren (700) nach Anspruch 2, wobei die Daten wenigstens einen Timing-Parameter aufweisen.

4. Verfahren (700) nach Anspruch 1, wobei das Synchronisationssignal ein Beacon-Signal aufweist.

5. Verfahren (700) nach Anspruch 1, wobei die Ressourceninformationen der ersten und zweiten Geräte Leistungsressourceninformationen aufweisen.

6. Verfahren (700) nach Anspruch 1, wobei die Ressourceninformationen der ersten und zweiten Geräte Verarbeitungsressourceninformationen aufweisen.

7. Verfahren (700) nach Anspruch 1, wobei das Empfangen des Synchronisationssignals das Empfangen wenigstens eines Timing-Parameters aufweist.

8. Verfahren (700) nach Anspruch 1, das weiterhin das periodische Senden der Ressourceninformationen des ersten Geräts an das zweite Gerät aufweist.

9. Verfahren (700) nach Anspruch 1, das weiterhin das Senden der Ressourceninformationen des ersten Geräts in Antwort auf eine Pairing-Nachricht von einem anderen Gerät aufweist.

10. Verfahren (700) nach Anspruch 1, wobei das Signal wenigstens einen Impuls aufweist.

11. Ein elektronisches Gerät (102A) für drahtlose Kommunikationen, aufweisend:
Mittel (752) zum Empfangen von Informationen, die wenigstens eine Ressource eines zweiten elektronischen Geräts (102B, 102C) identifizieren,
Mittel zum Senden von Informationen, die wenigstens eine Ressource des elektronischen Geräts (102A) identifizieren, an das zweite elektronische Gerät (102A, 102B),
Mittel (754) zum Vergleichen der Ressourceninformationen des elektronischen Geräts (102A) mit den empfangenen Ressourceninformationen des zweiten elektronischen Geräts (102B, 102C), und
Mittel (756) zum Empfangen eines Synchronisationssignals von dem zweiten elektronischen Gerät (102B, 102C) basierend auf dem Vergleich, wenn die Vergleichsmittel (754) bestimmen, dass das elektronische Gerät (102A) mehr von wenigstens einer Ressource aufweist als das zweite elektronische Gerät (102B, 102C).

12. Gerät (102A) nach Anspruch 11, die weiterhin Mittel zum Senden von Daten an das zweite elektronische Gerät basierend auf aus dem empfangenen Synchronisationssignal abgeleiteten Kommunikationsparametern aufweist.

13. Gerät (102A) nach Anspruch 12, wobei die Daten wenigstens einen Timing-Parameter aufweisen.

14. Gerät (102A) nach Anspruch 11, wobei das Synchronisationssignal ein Beacon-Signal aufweist.

15. Gerät (102A) nach Anspruch 11, wobei die Ressourceninformationen des elektronischen Geräts und des zweiten Geräts Leistungsressourceninformationen aufweisen.

16. Gerät (102A) nach Anspruch 11, wobei die Ressourceninformationen des elektronischen Geräts und des zweiten Geräts Verarbeitungsressourceninformationen aufweisen.

17. Gerät (102A) nach Anspruch 11, wobei das Synchronisationssignal wenigstens einen Timing-Parameter aufweist.

18. Gerät (102A) nach Anspruch 11, wobei die Empfangsmittel konfiguriert sind, um die Ressourceninformationen des zweiten Geräts periodisch von dem elektronischen Gerät zu empfangen.

19. Gerät (102A) nach Anspruch 11, wobei die Empfangsmittel konfiguriert sind, um die Ressourceninformationen des zweiten Geräts in Antwort auf eine durch das elektronische Gerät gesendete Pairing-Nachricht zu empfangen.

20. Gerät (102A) nach Anspruch 11, wobei das empfangene Signal wenigstens einen Impuls aufweist.

21. Gerät (102A) nach Anspruch 20, wobei der wenigstens eine Impuls eine normierte Bandbreite von wenigstens ungefähr 20% und eine Bandbreite von wenigstens ungefähr 500 MHz oder eine normierte Bandbreite von wenigstens ungefähr 20% und eine Bandbreite von wenigstens ungefähr 500 MHz oder mehr aufweist.

22. Ein Computerprogrammprodukt für drahtlose Kommunikationen mit einem computerlesbaren Medium, das Codes aufweist, die durch wenigstens einen Computer ausgeführt werden können, um das Verfahren nach einem der Ansprüche 1 bis 10 durchzuführen.

## Revendications

1. Procédé (700) de communication sans fil, comprenant :
recevoir (702), au niveau d'un premier dispositif électronique (102A), des informations identifiant au moins une ressource d'un deuxième dispositif électronique (102B, 102C) ;
émettre, à partir du premier dispositif électronique (102A), des informations identifiant au moins une ressource du premier dispositif électronique (102A) vers le deuxième dispositif électronique (102A, 102B) ;
comparer (706), au niveau du premier dispositif électronique (102A), des informations de ressources du premier dispositif électronique et les informations de ressources reçues du deuxième dispositif électronique (102B, 102C) ; et
recevoir (708), au niveau du premier dispositif électronique (102A), un signal de synchronisation à partir du deuxième dispositif électronique (102B, 102C) sur la base de la comparaison, si la comparaison détermine que le premier dispositif électronique (102A) a au moins une ressource de plus que le deuxième dispositif électronique (102B, 102C).

2. Procédé (700) selon la revendication 1, comprenant en outre l'émission de données vers le deuxième dispositif électronique sur la base d'au moins un paramètre de communication déduit du signal de synchronisation reçu.

3. Procédé (700) selon la revendication 2, dans lequel les données comprennent au moins un paramètre temporel.

4. Procédé (700) selon la revendication 1, dans lequel le signal de synchronisation comprend un signal de balise.

5. Procédé (700) selon la revendication 1, dans lequel les informations de ressources de chacun du premier et du deuxième dispositif comprennent des informations de ressources de puissance.

6. Procédé (700) selon la revendication 1, dans lequel les informations de ressources de chacun du premier et du deuxième dispositif comprennent des informations de ressources de traitement.

7. Procédé (700) selon la revendication 1, dans lequel le signal de synchronisation comprend la réception d'au moins un paramètre temporel.

8. Procédé (700) selon la revendication 1, comprenant en outre une émission périodique des informations de ressources du premier dispositif vers le premier dispositif.

9. Procédé (700) selon la revendication 1, comprenant en outre l'émission des informations de ressources du premier dispositif en réponse à un message d'appairage provenant d'un autre dispositif.

10. Procédé (700) selon la revendication 1, dans lequel le signal comprend au moins une impulsion.

11. Dispositif électronique (102A) pour des communications sans fil, comprenant :
des moyens (752) pour recevoir des informations identifiant au moins une ressource d'un deuxième dispositif électronique (102B, 102C) ;
des moyens pour émettre des informations identifiant au moins une ressource du premier dispositif électronique (102A) vers le deuxième dispositif électronique (102A, 102B) ;
des moyens (754) pour comparer des informations de ressources du dispositif électronique (102A) et les informatisons de ressources reçues du deuxième dispositif électronique (102B, 102C) ; et
des moyens (756) pour recevoir un signal de synchronisation à partir du deuxième dispositif électronique (102B, 102C) sur la base de la comparaison, si les moyens de comparaison (754) déterminent que le dispositif électronique (102A) a au moins une ressource de plus que le deuxième dispositif électronique (102B, 102C).

12. Dispositif (102A) selon la revendication 11, comprenant en outre des moyens pour émettre des données vers le deuxième dispositif électronique sur la base de paramètres de communication déduits du signal de synchronisation reçu.

13. Dispositif (102A) selon la revendication 12, dans lequel les données comprennent au moins un paramètre temporel.

14. Dispositif (102A) selon la revendication 11, dans lequel le signal de synchronisation comprend un signal de balise.

15. Dispositif (102A) selon la revendication 11, dans lequel les informations de ressources de chacun du dispositif électronique et du deuxième dispositif comprennent des informations de ressources de puissance.

16. Dispositif (102A) selon la revendication 11, dans lequel les informations de ressources de chacun du dispositif électronique et du deuxième dispositif comprennent des informations de ressources de traitement.

17. Dispositif (102A) selon la revendication 11, dans lequel le signal de synchronisation comprend au moins un paramètre temporel.

18. Dispositif (102A) selon la revendication 11, dans lequel les moyens de réception sont agencés pour recevoir périodiquement les informations de ressources du deuxième dispositif à partir du dispositif électronique.

19. Dispositif (102A) selon la revendication 11, dans lequel les moyens de réception sont agencés pour recevoir les informations de ressources du deuxième en réponse à un message d'appairage émis par le dispositif électronique.

20. Dispositif (102A) selon la revendication 11, dans lequel le signal reçu comprend au moins une impulsion.

21. Dispositif (102A) selon la revendication 20, dans lequel ladite au moins une impulsion a une largeur de bande fractionnaire d'au moins environ 20 %, a une largeur de bande d'au moins environ 500 MHz, ou a une largeur de bande fractionnaire d'au moins environ 20 % et a une largeur de bande d'au moins environ 500 MHz ou plus.

22. Produit programme d'ordinateur pour des communications sans fil, comprenant un support lisible par un ordinateur comprenant des codes exécutables par au moins un ordinateur pour réaliser le procédé de l'une quelconque des revendications 1 à 10.
